# EUROPEAN PATENT SPECIFICATION

(11) **EP 4 360 979 B1**
(45) Date of publication and mention of the grant of the patent: **21.05.2025**
(21) Application number: 22897619.7
(22) Date of filing: 10.11.2022
(51) Int. Cl.: B60W 50/02, B60W 50/023, G06F 11/20, B60W 60/00, B60W 50/029

(54) **AUTONOMOUS DRIVING CONTROL SYSTEM AND VEHICLE**
AUTONOMES FAHRSTEUERUNGSSYSTEM UND FAHRZEUG
SYSTÈME DE COMMANDE DE CONDUITE AUTONOME ET VÉHICULE

(30) Priority: 26.11.2021 CN 202111423748
(43) Date of publication of application: 01.05.2024
(73) Proprietor: Yutong Bus Co., Ltd., Zhengzhou, Henan 450061 (CN)
(72) Inventor: CAO, Qiang, Zhengzhou, Henan 450061 (CN); ZHU, Min, Zhengzhou, Henan 450061 (CN); CHEN, Xin, Zhengzhou, Henan 450061 (CN); BU, Yushuai, Zhengzhou, Henan 450061 (CN)
(74) Representative: Gulde & Partner
(86) International application number: PCT/CN2022/131083
(87) International publication number: WO 2023/093536

(56) References cited:
- EP-A1- 3 498 561
- EP-A1- 3 739 414
- WO-A1-2020/165058
- WO-A1-2021/151501
- CN-A- 109 917 779
- CN-A- 111 752 269
- CN-A- 111 942 349
- CN-A- 112 849 055
- CN-A- 113 050 605
- CN-A- 113 183 978
- US-A1- 2011 098 886
- US-A1- 2019 193 746

## Description

### TECHNICAL FIELD

The present invention relates to the field of fault diagnosis and decision-making for an autonomous driving system, and specifically to an autonomous driving control system and a vehicle.

### BACKGROUND

In recent years, more and more scientific research institutions, universities, and automobile enterprises pay attention to the development of autonomous driving systems, and vehicles equipped with an autonomous driving system gradually appear in the streets. With the popularization and application of autonomous driving vehicles, accidents involving autonomous driving vehicles have also attracted widespread attention from the society. Therefore, how to ensure the driving safety of autonomous driving vehicles to improve passengers' sense of safety and satisfaction has become a problem to be overcome in the development of such vehicles

EP 3 739 414 A1 discloses an autonomous driving system comprising a primary decision unit configured to calculate decision information based on environment information and an alternative decision unit configured to calculate decision information based on the environment information in response to detecting that the primary decision unit is abnormal.

Existing autonomous driving vehicles generally realize autonomous driving through an autonomous driving intelligent control unit of an autonomous driving system. However, most of the existing autonomous driving vehicles lack the inspection of the autonomous driving intelligent control unit. As a result, safety problems are likely to arise when the autonomous driving intelligent control unit becomes abnormal. In a small number of autonomous driving vehicles, a detection module is built in the autonomous driving intelligent control unit to detect whether the autonomous driving intelligent control unit is abnormal. However, the built-in detection module cannot detect a packet delay abnormality in time when the autonomous driving intelligent control unit sends out a packet, and autonomous driving still has safety problems. In addition, existing autonomous driving vehicles lack anomaly detection for the detection module. Therefore, existing autonomous driving vehicles lack effective anomaly detection for the autonomous driving intelligent control unit, and the vehicle cannot be effectively controlled when the autonomous driving intelligent control unit is abnormal, leading to accidents.

### SUMMARY

The present invention provides an autonomous driving control system and a vehicle, to solve the vehicle safety problem in the prior art that is caused by the autonomous driving vehicle lacking effective anomaly detection for the autonomous driving intelligent control unit.

To solve the above technical problem, the present invention provides an autonomous driving control system, including an autonomous driving intelligent control unit and a vehicle control unit. The autonomous driving intelligent control unit is in communication connection with the vehicle control unit. The autonomous driving control system further includes a drive-by-wire control unit and a safety redundancy control unit. The drive-by-wire control unit is respectively in communication connection with the autonomous driving intelligent control unit and the vehicle control unit. The safety redundancy control unit is respectively in communication connection with the drive-by-wire control unit and the vehicle control unit. The drive-by-wire control unit is configured to send a braking instruction to the vehicle control unit when detecting that the autonomous driving intelligent control unit is abnormal. The safety redundancy control unit is configured to send a braking instruction to the vehicle control unit when detecting that the drive-by-wire control unit is abnormal.

The above technical solution has the following beneficial effects: The drive-by-wire control unit connected to the autonomous driving intelligent control unit is arranged to detect whether the autonomous driving intelligent control unit is abnormal. If yes, the drive-by-wire control unit sends a braking instruction to the vehicle control unit in time, to prevent the driving safety problem when the autonomous driving intelligent control unit is abnormal, thereby improving the reliability of the autonomous driving control system and the driving safety. In addition, the safety redundancy control unit connected to the drive-by-wire control unit is further arranged to detect whether the drive-by-wire control unit is abnormal. If yes, the safety redundancy control unit sends a braking instruction to the vehicle control unit in time, to prevent the driving safety problem when the drive-by-wire control unit is abnormal. Through the two-level safety control mechanism formed by the drive-by-wire control unit and the safety redundancy control unit, the vehicle can be effectively controlled when the autonomous driving intelligent control unit is abnormal, thereby improving the reliability of the autonomous driving control system and the driving safety.

Further, to further improve the reliability of the autonomous driving control system, the present invention provides an autonomous driving control system, where the safety redundancy control unit is further configured to control a braking module connected thereto, and send a braking instruction to the braking module when detecting that the vehicle control unit is abnormal.

Further, to accurately and comprehensively detect whether the autonomous driving intelligent control unit or the drive-by-wire control unit is abnormal, the present invention provides an autonomous driving control system, where being abnormal refers to at least one of the two situations for the sent instruction: timeout or failure of a cyclic redundancy check (CRC) check.

Further, to ensure that the vehicle can run normally when the autonomous driving intelligent control unit is normal, the present invention provides an autonomous driving control system, where the drive-by-wire control unit is further configured to control a steering module connected thereto, and when the autonomous driving intelligent control unit is normal, the drive-by-wire control unit is configured to forward a steering instruction from the autonomous driving intelligent control unit to the steering module and forward a driving instruction or a braking instruction from the autonomous driving intelligent control unit to the vehicle control unit.

Further, to more accurately and comprehensively detect whether the autonomous driving intelligent control unit or the drive-by-wire control unit is abnormal, the present invention provides an autonomous driving control system, where being abnormal further includes a sudden change in the steering instruction or the driving instruction.

Further, to further improve the reliability of communication between the control units, the present invention provides an autonomous driving control system, where the drive-by-wire control unit communicates with the autonomous driving intelligent control unit and the vehicle control unit through Controller Area Network (CAN) communication.

Further, to further improve the reliability of communication between the control units, the present invention provides an autonomous driving control system, where the safety redundancy control unit communicates with the drive-by-wire control unit and the vehicle control unit through CAN communication.

The present invention further provides a vehicle, which includes a steering module, a driving module, and a braking module, and the vehicle further includes an autonomous driving control system described above. The autonomous driving control system is respectively connected to the steering module, the driving module, and the braking module. The autonomous driving control system is configured to respectively send a steering instruction, a driving instruction, and a braking instruction to the steering module, the driving module, and the braking module. The steering module is configured to implement steering after receiving the steering instruction. The driving module is configured to implement driving after receiving the driving instruction. The braking module is configured to implement braking after receiving the braking instruction.

### BRIEF DESCRIPTION OF THE DRAWINGS

FIG. 1 is a block diagram of an autonomous driving control system according to the present invention;
FIG. 2 is a control logic diagram of a drive-by-wire control unit according to the present invention;
FIG. 3(a) is a first control logic diagram of a safety redundancy control unit according to the present invention; and
FIG. 3(b) is a second control logic diagram of a safety redundancy control unit according to the present invention.

### DETAILED DESCRIPTION

The basic concept of the present invention is as follows: A drive-by-wire control unit connected to an autonomous driving intelligent control unit is arranged to detect whether the autonomous driving intelligent control unit is abnormal. If yes, the drive-by-wire control unit sends a braking instruction to a vehicle control unit in time. In addition, a safety redundancy control unit connected to the drive-by-wire control unit is further arranged to detect whether the drive-by-wire control unit is abnormal. If yes, the safety redundancy control unit sends a braking instruction to the vehicle control unit in time. Through the two-level safety control mechanism formed by the drive-by-wire control unit and the safety redundancy control unit, the vehicle can be effectively controlled when the autonomous driving intelligent control unit is abnormal, thereby improving the reliability of the autonomous driving control system and the driving safety.

To make the objectives, technical solutions, and technical effects of the present invention clearer, the present invention is described in further detail with reference to the accompanying drawings and specific embodiments.

### Embodiment of autonomous driving control system:

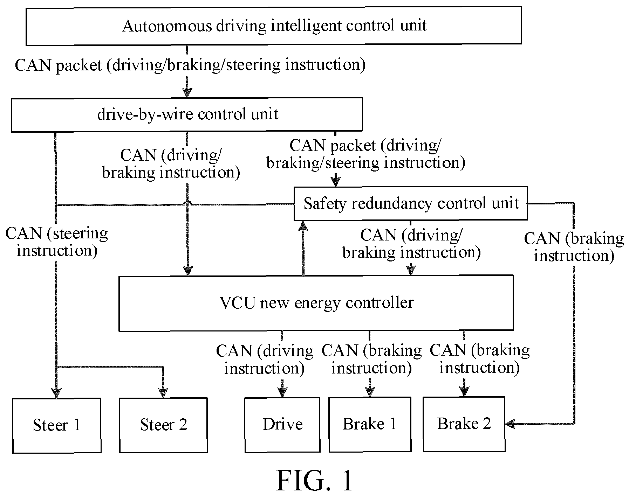

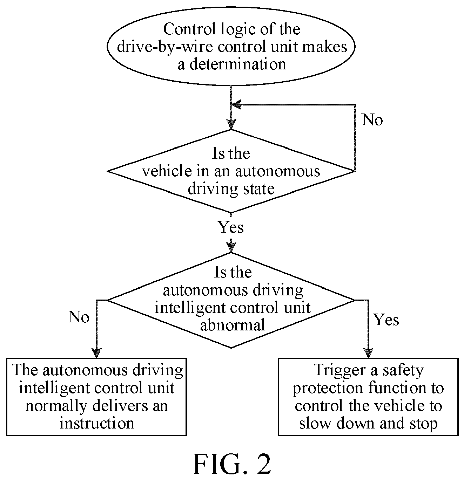

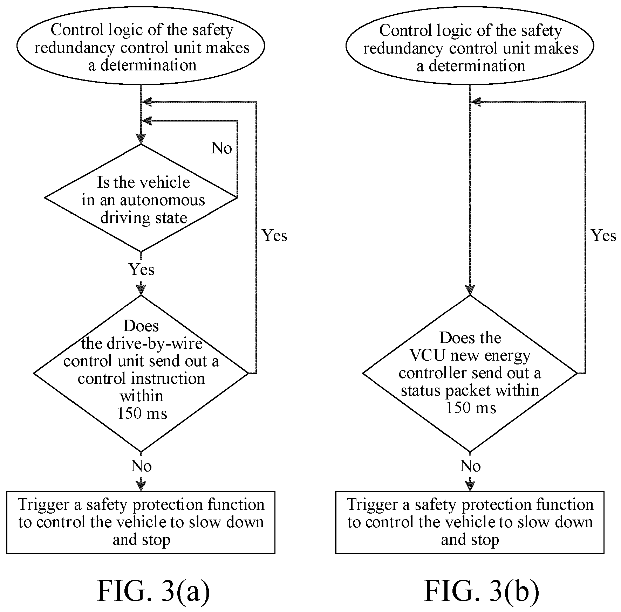

FIG. 1 is a block diagram of an autonomous driving control system according to the present invention; FIG. 2 is a control logic diagram of a drive-by-wire control unit according to the present invention; FIG. 3(a) is a first control logic diagram of a safety redundancy control unit according to the present invention; and FIG. 3(b) is a second control logic diagram of a safety redundancy control unit according to the present invention.

This embodiment provides an autonomous driving control system. The autonomous driving control system of this embodiment operates when a vehicle is in an unmanned state. As shown in FIG. 1, the autonomous driving control system includes an autonomous driving intelligent control unit, a vehicle control unit (i.e. VCU new energy controller), a drive-by-wire control unit, and a safety redundancy control unit. The drive-by-wire control unit is a chassis driver by wire (DBW), which is a module for communication with the autonomous driving intelligent control unit and a CAN bus of the vehicle. The vehicle control unit (VCU) is a control unit in a pure electric vehicle that is used to implement driving torque control, braking energy optimization control, vehicle energy management, CAN maintenance and management, fault diagnosis and processing, vehicle status monitoring, and other functions. The autonomous driving intelligent control unit is in communication connection with the vehicle control unit. The drive-by-wire control unit is respectively in communication connection with the autonomous driving intelligent control unit and the vehicle control unit. The safety redundancy control unit is respectively in communication connection with the drive-by-wire control unit and the vehicle control unit. The drive-by-wire control unit communicates with the autonomous driving intelligent control unit and the vehicle control unit through CAN communication. The safety redundancy control unit communicates with the drive-by-wire control unit and the vehicle control unit through CAN communication.

In this embodiment, the autonomous driving intelligent control unit is configured to generate a CAN packet to realize autonomous driving of the vehicle. The CAN packet includes a steering instruction, a driving instruction, and a braking instruction.

In this embodiment, the drive-by-wire control unit is configured to receive the CAN packet from the autonomous driving intelligent control unit and detect whether the autonomous driving intelligent control unit is abnormal.

In this embodiment, the drive-by-wire control unit sends a CAN packet containing a braking instruction to the vehicle control unit when detecting that the autonomous driving intelligent control unit is abnormal. The abnormality of autonomous driving intelligent control unit includes three conditions: timeout of an instruction sent by the autonomous driving intelligent control unit, an illogical change in the steering instruction and/or driving instruction sent by the autonomous driving intelligent control unit, and failure of a cyclic redundancy check (CRC) check of an instruction sent by the autonomous driving intelligent control unit. If at least one of the three conditions occurs in the autonomous driving intelligent control unit, it indicates that the autonomous driving intelligent control unit is abnormal. A control instruction delivered by the autonomous driving intelligent control unit is abnormal includes but is not limited to cases shown in Table 1.

**Table 1 Definition table of abnormal states of control instructions**

| No. | Abnormal state of control instruction delivered by the autonomous driving intelligent control unit |
|---|---|
| 1 | Timeout of 100 ms of driving control signal (or according to a calibration value) |
| 2 | Timeout of 100 ms of braking control signal (or according to a calibration value) |
| 3 | Timeout of 100 ms of steering control signal (or according to a calibration value) |
| 4 | Failure of a CRC check of driving control signal |
| 5 | Failure of a CRC check of braking control signal |
| 6 | Failure of a CRC check of steering control signal |
| 7 | Illogical change of driving control signal |
| 8 | Illogical change of steering control signal |

The illogical change of the sent steering instruction and/or driving instruction means a sudden change in the sent steering instruction and/or driving instruction. To be specific, during driving, a normal steering instruction generally exhibits a linear relationship, i.e., the corresponding steering angle changes linearly. For example, in normal cases, the steering angle gradually increases from 10° to 15° and then to 20°. If the steering angle suddenly changes from 10° to 50°, it can be determined that the steering instruction has a sudden change. Similar to the steering instruction, a normal driving instruction generally also exhibits a linear relationship, i.e., the corresponding torque also changes linearly. For example, in normal cases, the torque gradually increases from 20 N·m to 30 N·m and then to 40 N·m. If the torque suddenly changes from 20 N·m to 100 N·m, it can be determined that the driving instruction has a sudden change.

In this embodiment, to ensure that the vehicle can run normally when the autonomous driving intelligent control unit is normal, the drive-by-wire control unit is further configured to control a steering module connected thereto, and when the autonomous driving intelligent control unit is normal, the drive-by-wire control unit forwards a steering instruction from the autonomous driving intelligent control unit to the steering module and forwards a driving instruction or a braking instruction from the autonomous driving intelligent control unit to the vehicle control unit.

In this embodiment, an operation process of the drive-by-wire control unit is as follows.

As shown in FIG. 2, when the vehicle is in a running state, the drive-by-wire control unit first determines whether the vehicle is currently in an autonomous driving state, and when determining that the vehicle is currently in the autonomous driving state, determines whether the autonomous driving intelligent control unit is abnormal; if determining that a control instruction delivered by the autonomous driving intelligent control unit is in a normal state, normally deliver the control instruction; and if determining that the control instruction delivered by the autonomous driving intelligent control unit is in an abnormal state, trigger a safety protection function to intercept the control instruction delivered by the abnormal autonomous driving intelligent control unit and control the vehicle to slow down and stop safely.

In this embodiment, the safety redundancy control unit is configured to receive a CAN packet from the drive-by-wire control unit and detect whether the drive-by-wire control unit is abnormal. The CAN packet includes a steering instruction, a driving instruction, and a braking instruction.

In this embodiment, the safety redundancy control unit sends a CAN packet containing a braking instruction to the vehicle control unit when detecting that the drive-by-wire control unit is abnormal. The drive-by-wire control unit is abnormal includes two cases: timeout of an instruction sent by the drive-by-wire control unit, and failure of a CRC check of the instruction sent by the drive-by-wire control unit. If at least one of the two cases occurs in the drive-by-wire control unit, it indicates that the drive-by-wire control unit is abnormal.

In this embodiment, to further improve the reliability of the autonomous driving control system, the safety redundancy control unit is further configured to control a braking module connected thereto; and the safety redundancy control unit further detects whether the vehicle control unit is abnormal, and when detecting that the vehicle control unit is abnormal, sends a CAN packet containing a braking instruction to the braking module. That the vehicle control unit is abnormal includes two cases: timeout of an instruction sent by the vehicle control unit, and failure of a CRC check of the instruction sent by the vehicle control unit. If at least one of the two cases occurs in the vehicle control unit, it indicates that the vehicle control unit is abnormal.

In this embodiment, an operation process of the safety redundancy control unit is as follows.

As shown in FIG. 3(a), when the vehicle is in a running state, the safety redundancy control unit first determines whether the vehicle is currently in an autonomous driving state, and when determining that the vehicle is currently in the autonomous driving state, determines whether the drive-by-wire control unit sends out a control instruction within 150 ms. When determining that the drive-by-wire control unit normally delivers a control instruction within 150 ms and the control instruction is checked to be normal, the safety redundancy control unit is in a monitoring state, and continuously monitors a timeout status of the control instruction of the autonomous driving system. When determining that the drive-by-wire control unit has not delivered a control instruction within 150 ms, a safety protection function is triggered, and the safety redundancy control unit delivers a control instruction to control the vehicle to slow down and stop safely.

As shown in FIG. 3(b), when the vehicle is in a running state, the safety redundancy control unit monitors whether the VCU new energy controller sends out a status packet within 150 ms and whether the status packet is checked to be normal. When determining that the VCU new energy controller sends out a status packet within 150 ms and the status packet is checked to be normal, the safety redundancy control unit is in a monitoring state, continuously monitors a timeout status of the status packet from the VCU new energy controller. When determining that the VCU new energy controller has not sent out a status packet within 150 ms, a safety protection function is triggered, and the safety redundancy control unit delivers a control instruction to the braking module to control the vehicle to slow down and stop safely.

In this embodiment, the vehicle control unit is configured to receive a CAN packet from the drive-by-wire control unit or the safety redundancy control unit, and control the driving module or the braking module to implement driving or braking of the vehicle.

In this embodiment, an operation process of the autonomous driving control system is as follows.

The drive-by-wire control unit receives a CAN packet for driving, braking, and steering control from the autonomous driving intelligent control unit, and when the CAN packet for driving, braking, and steering control is in an abnormal state such as timeout or check failure, delivers a braking instruction to the vehicle control unit to make the autonomous driving vehicle stop safely. When the CAN packet for driving, braking, and steering control is in a normal state, the drive-by-wire control unit normally delivers the CAN packet from the autonomous driving system intelligent control unit to a vehicle execution layer (vehicle control unit or steering module), to enable the vehicle to be in a safe autonomous driving state.

The safety redundancy control unit receives the CAN packet for driving, braking, and steering control from the drive-by-wire control unit, and when the CAN packet for driving, braking, and steering control is in an abnormal state such as timeout or check failure, delivers a braking instruction to the vehicle control unit to make the autonomous driving vehicle stop safely. When the CAN packet for driving, braking, and steering control is in a normal state, the safety redundancy control unit is in a monitoring state and does not send out any control CAN packet instruction.

The safety redundancy control unit further receives a status CAN packet from the VCU new energy controller (i.e., the vehicle control unit). When the status CAN packet from the VCU new energy controller is in an abnormal state of missing, the safety redundancy control unit directly delivers a CAN packet for braking control to the braking module to make the autonomous driving vehicle stop safely.

Based on the autonomous driving control system of this embodiment, the drive-by-wire control unit connected to the autonomous driving intelligent control unit is arranged to detect whether the autonomous driving intelligent control unit is abnormal. If yes, the drive-by-wire control unit sends a braking instruction to the vehicle control unit in time, to prevent the driving safety problem when the autonomous driving intelligent control unit is abnormal, thereby improving the reliability of the autonomous driving control system and the driving safety. In addition, the safety redundancy control unit connected to the drive-by-wire control unit is further arranged to detect whether the drive-by-wire control unit is abnormal. If yes, the safety redundancy control unit sends a braking instruction to the vehicle control unit in time, to prevent the driving safety problem when the drive-by-wire control unit is abnormal. Through the two-level safety control mechanism formed by the drive-by-wire control unit and the safety redundancy control unit, the vehicle can be effectively controlled when the autonomous driving intelligent control unit is abnormal, thereby improving the reliability of the autonomous driving control system and the driving safety. In addition, the safety redundancy control unit can further control the vehicle to brake and stop when the vehicle control unit is abnormal. The monitoring of the status CAN packet from the vehicle control unit by the safety redundancy control unit constitutes a three-level safety protection decision-making mechanism for the autonomous driving vehicle, thereby enabling the vehicle to run more safely and solving the problems endangering the safety of passengers, such as out-of-control and collision of the vehicle during autonomous driving caused by the collapse or poor stability of the autonomous driving system. The autonomous driving control system of this embodiment can be applied to, for example, but not limited to, ensure the driving safety of an autonomous driving vehicle.

### Embodiment of vehicle:

This embodiment provides a vehicle. The vehicle of this embodiment is an autonomous driving vehicle. The vehicle of this embodiment includes a steering module, a driving module, a braking module, and an autonomous driving control system.

In this embodiment, the autonomous driving control system is respectively connected to the steering module, the driving module, and the braking module, and the autonomous driving control system is configured to respectively send steering instruction, driving instruction, and braking instruction to the steering module, the driving module, and the braking module. Details of the autonomous driving control system have been described in the embodiment of the autonomous driving control system and will not be repeated herein.

The steering module is configured to implement steering after receiving the steering instruction. The steering module is, for example, a steering controller. There is at least one steering module.

The driving module is configured to implement driving after receiving the driving instruction. The driving module is, for example, a driving controller.

The braking module is configured to implement braking after receiving the braking instruction. The braking module is, for example, a braking controller. There is at least one braking module.

The vehicle of this embodiment can solve the vehicle safety problem in the prior art that is caused by the autonomous driving vehicle lacking effective anomaly detection for the autonomous driving intelligent control unit.

## Claims

1. An autonomous driving control system, comprising an autonomous driving intelligent control unit and a vehicle control unit, wherein the autonomous driving intelligent control unit is in communication connection with the vehicle control unit, the autonomous driving control system further comprises a drive-by-wire control unit and a safety redundancy control unit, the drive-by-wire control unit is respectively in communication connection with the autonomous driving intelligent control unit and the vehicle control unit, the safety redundancy control unit is respectively in communication connection with the drive-by-wire control unit and the vehicle control unit, **characterised in that** the drive-by-wire control unit is configured to send a braking instruction to the vehicle control unit when detecting that the autonomous driving intelligent control unit is abnormal, and the safety redundancy control unit is configured to send a braking instruction to the vehicle control unit when detecting that the drive-by-wire control unit is abnormal.

2. The autonomous driving control system according to claim 1, wherein the safety redundancy control unit is further configured to control a braking module connected thereto, and send a braking instruction to the braking module when detecting that the vehicle control unit is abnormal.

3. The autonomous driving control system according to claim 1 or 2, wherein being abnormal is at least one of timeout of the sent instruction or failure of a cyclic redundancy check (CRC) check of the sent instruction.

4. The autonomous driving control system according to claim 3, wherein the drive-by-wire control unit is further configured to control a steering module connected thereto, and when the autonomous driving intelligent control unit is normal, the drive-by-wire control unit is configured to forward a steering instruction from the autonomous driving intelligent control unit to the steering module and forward a driving instruction or a braking instruction from the autonomous driving intelligent control unit to the vehicle control unit.

5. The autonomous driving control system according to claim 4, wherein being abnormal further comprises a sudden change in the steering instruction or the driving instruction.

6. The autonomous driving control system according to claim 1, wherein the drive-by-wire control unit communicates with the autonomous driving intelligent control unit and the vehicle control unit through Controller Area Network (CAN) communication.

7. The autonomous driving control system according to claim 1, wherein the safety redundancy control unit communicates with the drive-by-wire control unit and the vehicle control unit through CAN communication.

8. A vehicle, comprising a steering module, a driving module, and a braking module, the vehicle further comprising the autonomous driving control system according to any one of claims 1 to 7, wherein the autonomous driving control system is respectively connected to the steering module, the driving module, and the braking module; the autonomous driving control system is configured to respectively send a steering instruction, a driving instruction, and a braking instruction to the steering module, the driving module, and the braking module; the steering module is configured to implement steering after receiving the steering instruction; the driving module is configured to implement driving after receiving the driving instruction; and the braking module is configured to implement braking after receiving the braking instruction.

## Patentansprüche

1. Steuersystem für autonomes Fahren, umfassend eine intelligente Steuereinheit für autonomes Fahren und eine Fahrzeugsteuereinheit, wobei die intelligente Steuereinheit für autonomes Fahren in Kommunikationsverbindung mit der Fahrzeugsteuereinheit steht, das Steuersystem für autonomes Fahren ferner eine Drive-by-Wire-Steuereinheit und eine Sicherheitsredundanzsteuereinheit umfasst, die Drive-by-Wire-Steuereinheit jeweils in Kommunikationsverbindung mit der intelligenten Steuereinheit für autonomes Fahren und der Fahrzeugsteuereinheit steht, die Sicherheitsredundanzsteuereinheit jeweils in Kommunikationsverbindung mit der Drive-by-Wire-Steuereinheit und der Fahrzeugsteuereinheit steht, **dadurch gekennzeichnet, dass** die Drive-by-Wire-Steuereinheit konfiguriert ist, um eine Bremsanweisung an die Fahrzeugsteuereinheit zu senden, wenn detektiert wird, dass die intelligente Steuereinheit für autonomes Fahren fehlerhaft ist, und die Sicherheitsredundanzsteuereinheit konfiguriert ist, um eine Bremsanweisung an die Fahrzeugsteuereinheit zu senden, wenn detektiert wird, dass die Drive-by-Wire-Steuereinheit fehlerhaft ist.

2. Steuersystem für autonomes Fahren nach Anspruch 1, wobei die Sicherheitsredundanzsteuereinheit ferner konfiguriert ist, um ein damit verbundenes Bremsmodul zu steuern und eine Bremsanweisung an das Bremsmodul zu senden, wenn detektiert wird, dass die Fahrzeugsteuereinheit fehlerhaft ist.

3. Steuersystem für autonomes Fahren nach Anspruch 1 oder 2, wobei es sich bei fehlerhaft um mindestens eines von Zeitüberschreitung der gesendeten Anweisung oder Fehlschlagen einer zyklischen Redundanzprüfung (CRC) der gesendeten Anweisung handelt.

4. Steuersystem für autonomes Fahren nach Anspruch 3, wobei die Drive-by-Wire-Steuereinheit ferner konfiguriert ist, um ein damit verbundenes Lenkmodul zu steuern, und wenn die intelligente Steuereinheit für autonomes Fahren normal ist, die Drive-by-Wire-Steuereinheit konfiguriert ist, um eine Lenkanweisung von der intelligenten Steuereinheit für autonomes Fahren an das Lenkmodul weiterzuleiten und eine Fahranweisung oder eine Bremsanweisung von der intelligenten Steuereinheit für autonomes Fahren an die Fahrzeugsteuereinheit weiterzuleiten.

5. Steuersystem für autonomes Fahren nach Anspruch 4, wobei fehlerhaft ferner eine plötzliche Änderung der Lenkanweisung oder der Fahranweisung umfasst.

6. Steuersystem für autonomes Fahren nach Anspruch 1, wobei die Drive-by-Wire-Steuereinheit mit der intelligenten Steuereinheit für autonomes Fahren und der Fahrzeugsteuereinheit über Controller-Area-Network(CAN)-Kommunikation kommuniziert.

7. Steuersystem für autonomes Fahren nach Anspruch 1, wobei die Sicherheitsredundanzsteuereinheit mit der Drive-by-Wire-Steuereinheit und der Fahrzeugsteuereinheit über CAN-Kommunikation kommuniziert.

8. Fahrzeug, umfassend ein Lenkmodul, ein Fahrmodul und ein Bremsmodul, wobei das Fahrzeug ferner das Steuersystem für autonomes Fahren nach einem der Ansprüche 1 bis 7 umfasst, wobei das Steuersystem für autonomes Fahren jeweils mit dem Lenkmodul, dem Fahrmodul und dem Bremsmodul verbunden ist; das Steuersystem für autonomes Fahren konfiguriert ist, um jeweils eine Lenkanweisung, eine Fahranweisung und eine Bremsanweisung an das Lenkmodul, das Fahrmodul und das Bremsmodul zu senden; das Lenkmodul konfiguriert ist, um nach Empfangen der Lenkanweisung das Lenken umzusetzen; das Fahrmodul konfiguriert ist, um nach Empfangen der Fahranweisung das Fahren umzusetzen; und das Bremsmodul konfiguriert ist, um nach Empfangen der Bremsanweisung das Bremsen umzusetzen.

## Revendications

1. Système de commande de conduite autonome comprenant une unité de commande intelligente de conduite autonome et une unité de commande de véhicule, dans lequel l'unité de commande intelligente de conduite autonome est en connexion de communication avec l'unité de commande de véhicule, le système de commande de conduite autonome comprenant en outre une unité de commande d'entraînement par câble et une unité de commande de redondance de sécurité, l'unité de commande d'entraînement par câble étant respectivement en connexion de communication avec l'unité de commande intelligente de conduite autonome et l'unité de commande de véhicule, l'unité de commande de redondance de sécurité étant respectivement en connexion de communication avec l'unité de commande d'entraînement par câble et l'unité de commande de véhicule, **caractérisé en ce que** l'unité de commande d'entraînement par câble est configurée pour envoyer une instruction de freinage à l'unité de commande de véhicule lors de la détection que l'unité de commande intelligente de conduite autonome est anormale, et l'unité de commande de redondance de sécurité est configurée pour envoyer une instruction de freinage à l'unité de commande de véhicule lors de la détection que l'unité de commande d'entraînement par câble est anormale.

2. Système de commande de conduite autonome selon la revendication 1, dans lequel l'unité de commande de redondance de sécurité est en outre configurée pour commander un module de freinage connecté à celle-ci, et envoyer une instruction de freinage au module de freinage lors de la détection que l'unité de commande de véhicule est anormale.

3. Système de commande de conduite autonome selon la revendication 1 ou 2, dans lequel le fait d'être anormal est au moins l'un d'un délai d'attente de l'instruction envoyée ou d'un échec d'un contrôle de redondance cyclique (CRC) de l'instruction envoyée.

4. Système de commande de conduite autonome selon la revendication 3, dans lequel l'unité de commande d'entraînement par câble est en outre configurée pour commander un module de direction connecté à celle-ci, et lorsque l'unité de commande intelligente de conduite autonome est normale, l'unité de commande d'entraînement par câble est configurée pour transmettre une instruction de direction de l'unité de commande intelligente de conduite autonome au module de direction et transmettre une instruction de conduite ou une instruction de freinage depuis l'unité de commande intelligente de conduite autonome à l'unité de commande de véhicule.

5. Système de commande de conduite autonome selon la revendication 4, dans lequel le fait d'être anormal comprend en outre un changement soudain de l'instruction de direction ou de l'instruction de conduite.

6. Système de commande de conduite autonome selon la revendication 1, dans lequel l'unité de commande d'entraînement par câble communique avec l'unité de commande intelligente de conduite autonome et l'unité de commande de véhicule par le biais d'une communication de réseau de zone de contrôleur (CAN).

7. Système de commande de conduite autonome selon la revendication 1, dans lequel l'unité de commande de redondance de sécurité communique avec l'unité de commande d'entraînement par câble et l'unité de commande de véhicule par le biais d'une communication CAN.

8. Véhicule, comprenant un module de direction, un module de conduite, et un module de freinage, le véhicule comprenant en outre le système de commande de conduite autonome selon l'une quelconque des revendications 1 à 7, dans lequel le système de commande de conduite autonome est respectivement connecté au module de direction, au module de conduite, et au module de freinage ; le système de commande de conduite autonome étant configuré pour envoyer respectivement une instruction de direction, une instruction de conduite, et une instruction de freinage au module de direction, au module de conduite, et au module de freinage ; le module de direction étant configuré pour mettre en œuvre la direction après avoir reçu l'instruction de direction ; le module de conduite étant configuré pour mettre en œuvre la conduite après avoir reçu l'instruction de conduite ; et le module de freinage étant configuré pour mettre en œuvre le freinage après avoir reçu l'instruction de freinage.
